# EUROPÄISCHE PATENTSCHRIFT

(11) **EP 1 346 504 B1**
(45) Veröffentlichungstag und Bekanntmachung des Hinweises auf die Patenterteilung: **14.06.2006**
(21) Anmeldenummer: 01985864.6
(22) Anmeldetag: 11.12.2001
(51) Int. Cl.: H04L 1/18

(54) **EMPFÄNGER ZUM EMPFANG VON DATENRAHMEN DIE INFORMATION UND SIGNALISIERUNG ENTHALTEN**
RECEIVER FOR RECEIVING DATA FRAMES CONTAINING INFORMATION AND SIGNALING DATA
RECEPTEUR POUR LA RECEPTION DE TRAMES DE DONNEES CONTENANT DES DONNEES D'INFORMATION ET DES DONNEES DE SIGNALISATION

(30) Priorität: 18.12.2000 DE 10063078
(43) Veröffentlichungstag der Anmeldung: 24.09.2003
(73) Patentinhaber: Infineon Technologies AG, 81669 München (DE)
(72) Erfinder: HEIN, Werner, 81739 München (DE); STEGER, Johann, 81547 München (DE); WEBER, Michael, 85356 Freising (DE)
(74) Vertreter: Charles, Glyndwr
(86) Internationale Anmeldenummer: PCT/EP2001/014548
(87) Internationale Veröffentlichungsnummer: WO 2002/058313

(56) Entgegenhaltungen:
- EP-A- 0 938 207
- SUN Z ET AL: "Adaptive two-level unequal error protection convolutional code scheme for wireless ATM networks" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26. März 2000 (2000-03-26), Seiten 1693-1697, XP010376107 ISBN: 0-7803-5880-5
- ZHENQIANG SUN; KIMURA S ; EBIHARA Y: "DLC strategies with flexible error control in wireless ATM" MILCOM 2000 PROCEEDINGS. 21ST CENTURY MILITARY COMMUNICATIONS. ARCHITECTURES AND TECHNOLOGIES FOR INFORMATION SUPERIORITY , Bd. 1, 22. - 25. Oktober 2000, Seiten 90-94, XP002201490 Los Angeles, CA, USA

## Beschreibung

Die Erfindung betrifft einen Empfänger zum Empfang von Datenrahmen, die Informationsdaten und Signalisierungsdaten enthalten, insbesondere einen EGPRS-Empfänger für ein mobiles Telefon.

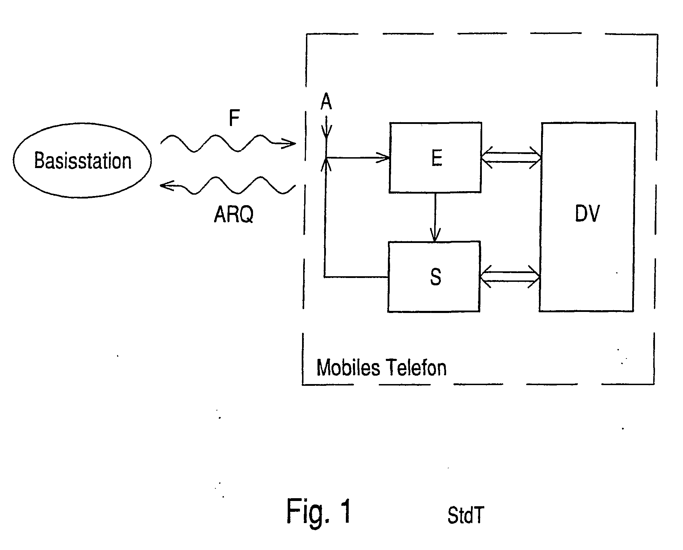

Fig. 1 zeigt schematisch ein mobiles Telefon mit einem Empfänger E und einem Sender S, die an eine Antenne A angeschlossen sind. Das mobile Telefon empfängt von einer Basisstation Datenrahmen (Frames F), die von dem Empfänger E zur weiteren Datenverarbeitung durch eine nachgeschaltete Datenverarbeitungseinheit DV abgegeben werden. Die Übertragungskanal zur Übertragung der Datenrahmen ist besonders beim Mobilfunk unter Umständen starken Störungen ausgesetzt, so dass die Datenrahmen F durch das mobile Telefon gegebenenfalls stark verfälscht empfangen werden. Ergibt die Dekodierung des empfangenen Datenframes F, dass dieser fehlerhaft ist, sendet das mobile Telefon ein automatisches Anforderungssignal ARQ an die Basisstation zur erneuten Übertragung des Datenframes F ab.

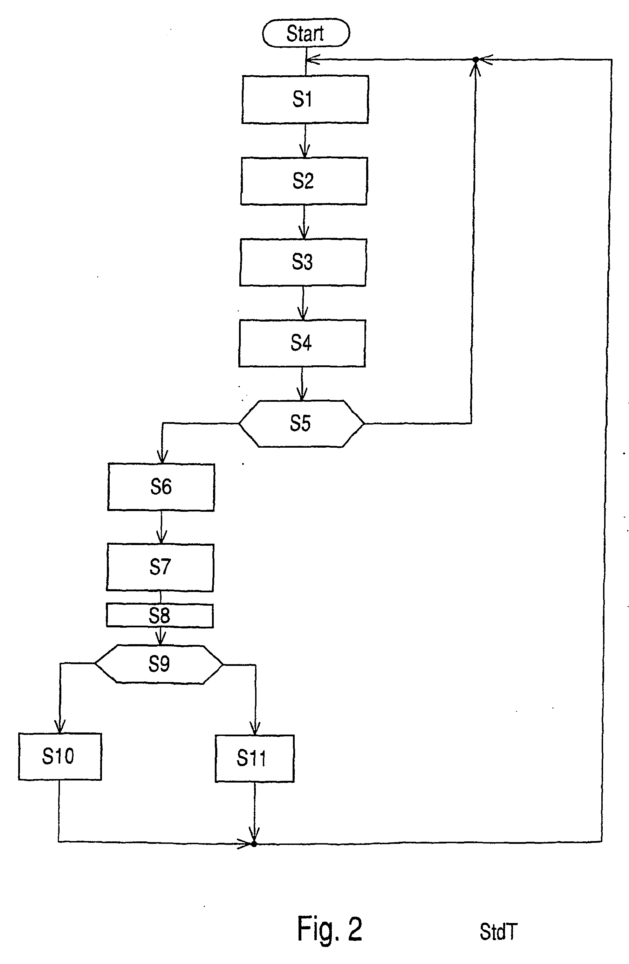

Fig. 2 zeigt ein Ablaufdiagramm des ARQ2-Verfahrens, wie es bei EGPRS-Empfängern nach dem Stand der Technik eingesetzt wird. GPRS (= general packet radio service) bezeichnet die Datenübertragung nach dem X.25-Standard über GSM (GSM: Global System for Mobile Communications). EGPRS-Empfänger sind GPRS-Empfänger unter dem sogenannten EDGE-Modulationsverfahren.

In einem Schritt S1 werden die Datenrahmen F durch das mobile Telefon über einen Hochfrequenzempfänger und einen Demodulator empfangen.

Anschließend erfolgt in einem Schritt S2 die Kanalentzerrung des empfangenen Datenrahmens mittels eines Entzerrers bzw. Equalizers.

Der empfangene Datenrahmen enthält Signalisierungsdaten und Informationsdaten. In einem Schritt S3 werden durch eine Trennschaltung des Empfängers E die Signalisierungsdaten und die Informationsdaten voneinander getrennt. Die empfangenen Signalisierungsdaten enthalten dabei eine Datenrahmenidentifizierung und eine Dekodieranweisung zur Dekodierung der zugehörigen Informationsdaten.

In einem Schritt S4 werden die abgetrennten empfangenen Signalisierungsdaten durch eine Kanaldekodierschaltung dekodiert, wobei die dekodierten Signalisierungsdaten die Dekodieranweisung zur Dekodierung der zugehörigen Informationsdaten enthalten.

In einem Schritt S5 prüft die Kanaldekodierungsschaltung, ab die Dekodierung der Signalisierungsdaten fehlerfrei erfolgt ist oder nicht.

Falls die Dekodierung der empfangenen Signalisierungsdaten die Kanaldekodierungsschaltung nicht fehlerfrei erfolgt ist, kehrt der Ablauf zu Schritt S1 zurück, und der nächste empfangene Datenrahmen F wird verarbeitet.

Falls umgekehrt im Schritt S5 festgestellt wird, dass die Dekodierung der Signalisierungsdaten durch die Kanaldekodierungsschaltung fehlerfrei erfolgt ist, werden die empfangenen Informationsdaten und die in den dekodierten Signalisierungsdaten enthaltene Dekodieranweisung zur Dekodierung der empfangenen Informationsdaten in einem Schritt S6 durch eine Speichersteuerung einer RLC/MAC-Steuerschaltung in einem Systemspeicher einer Basisband-Steuereinheit abgespeichert.

In einem Schritt S7 sucht die RLC/MAC-Steuerschaltung über ihre Speichersteuerung alle zwischengespeicherten empfangenen Informationsdaten, die die gleiche Paketnummer bzw. Datenrahmenidentifizierung aufweisen, und liest diese aus dem Systemspeicher aus. Die ausgelesenen Informationsdaten werden einem Informationsdatendekodierer zur Dekodierung der Informationsdaten entsprechend der Dekodierungsanweisung zugeführt.

In einem Schritt S8 werden die ausgelesenen Informationsdaten durch den Informationsdatendekodierer entsprechend der Dekodieranweisung zur Dekodierung der Informationsdaten dekodiert. Hierzu erhält der Informationsdatendekodierer von einer in der RLC/MAC-Steuerschaltung enthaltenen Datendekodiersteuerung die entsprechende Informationsdaten-Dekodieranweisung. Die RLC/MAC-Steuerschaltung erhält ihrerseits die Dekodieranweisung zur Dekodierung der Informationsdaten von einem Signalisierungsdatendekodierer.

In einem Schritt S9 prüft der Informationsdatendekodierer, ob die Dekodierung der Informationsdaten fehlerfrei erfolgt ist oder nicht und gibt ein entsprechendes Anzeigesignal an die RLC/MAC-Steuerschaltung ab.

Falls die Dekodierung der Informationsdaten durch den Informationsdatendekodierer fehlerfrei erfolgt ist, gibt die RLC/MAC-Steuerschaltung ein Steuersignal an den Informationsdatendekodierer zur Übertragung der dekodierten Informationsdaten an eine nachgeschaltete LLC-Schaltung (LLC: Logic Link Control) ab. Gleichzeitig werden sämtliche in dem Systemspeicher zwischengespeicherten Informationsdaten mit der zugehörigen Datenrahmenidentifizierung bzw. Paketnummer aus dem RLC-Speicherbereich des Systemspeichers gelöscht.

Falls im Schritt S9 der Informationsdatendekodierer erkennt, dass die Dekodierung der Informationsdaten nicht fehlerfrei erfolgt ist, werden die fehlerhaft dekodierten Informationsdaten nicht an die nachgeschaltete LLC-Schaltung übertragen, und die empfangenen. Die in dem Systemspeicher zwischengespeicherten Informationsdaten werden aus dem RLC-Speicherbereich des Systemspeichers nicht gelöscht und verbleiben in dem Speicher. Ferner gibt die RLC/MAC-Steuerschaltung ein Steuersignal an den Sender des mobilen Telefons ab, der den fehlerhaft dekodierten Datenrahmen mit der zugehörigen Datenrahmenidentifizierung mittels eines an die Basisstation abgegebenen Anforderungssignals (ARQ) erneut anfordert.

Anschließend kehrt der Vorgang zu Schritt S1 zurück.

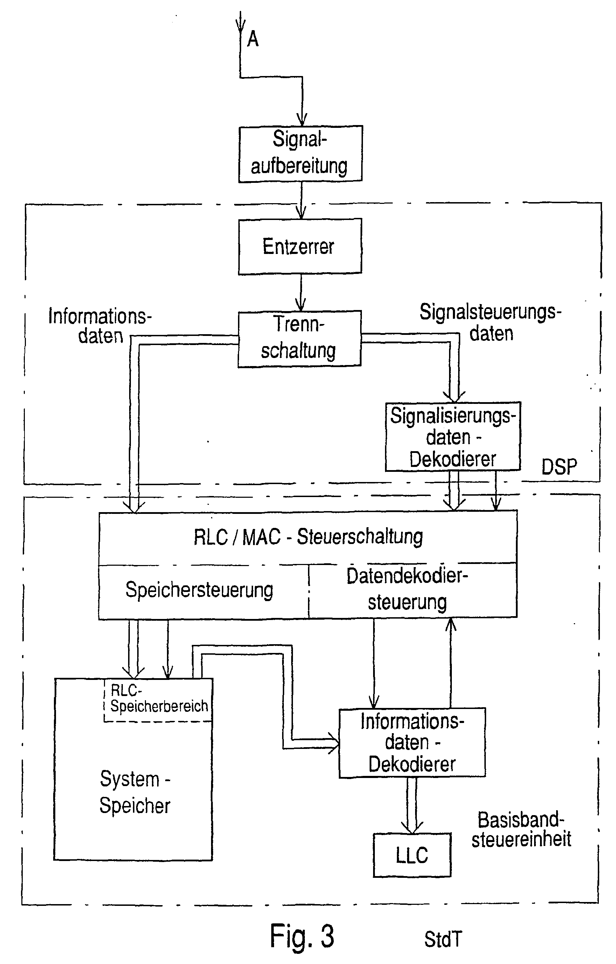

Fig. 3 zeigt einen EGPRS-Empfänger nach dem Stand der Technik, bei dem das in Fig. 2 dargestellte ARQ2-Verfahren durchgeführt wird. Der Empfänger besitzt eine Antenne A zum Empfang der übertragenen Datenrahmen und eine nachgeschaltete. Signalaufbereitungsschaltung. In der Signalaufbereitungsschaltung werden die analog übertragenen Datenrahmen durch eine HF-Demodulationsschaltung demoduliert und einer nachgeschalteten analogen Bandpaßfilterbank zur Frequenzbandselektion zugeführt. Der Bandpaßfilterbank ist ein Analog-/Digitalwandler zur Umwandlung der demodulierten Datenrahmen und digitale Datenrahmen nachgeschaltet.

Die digitalen Datenrahmen werden einem digitalen Entzerrer bzw. Equalizer zur Entzerrung der über den Übertragungskanal übertragenen Daten zugeführt.

Ausgangsseitig ist dem Entzerrer eine Datentrennschaltung nachgeschaltet, die die in dem Datenrahmen enthaltenen Signalisierungsdaten von den ebenfalls in dem Datenrahmen enthaltenen Informationsdaten trennt. Die Signalisierungsdaten sind von der Trennschaltung einem Signalisierungsdatendekodierer über Datenleitungen zugeführt. Der Signalisierungsdatendekodierer, die Datentrennschaltung und der Entzerrer sind dabei in einem digitalen Signalprozessor (DSP) integriert. Der Signalisierungsdatendekodierer dekodiert die empfangenen Signalisierungsdaten entsprechend einer vorgegebenen Dekodieranweisung zur Dekodierung von Signalisierungsdaten und gibt die dekodierten Signalisierungsdaten an die RLC/MAC-Steuerschaltung über Datenleitungen ab. Gleichzeitig stellt der Signalisierungsdatendekodierer fest, ob die Dekodierung der Signalisierungsdaten fehlerfrei erfolgt ist oder nicht. Diese Feststellung wird mittels redundanter Daten getroffen, die in den Signalisierungsdaten enthalten sind. Der Signalisierungsdatendekodierer gibt über eine Steuerleitung ein entsprechendes Anzeigesignal, welches die fehlerfreie bzw. fehlerhafte Dekodierung der Signalisierungsdaten eines Datenrahmens anzeigt, an die RLC/MAC-Steuerschaltung ab.

Falls das von dem Signalisierungsdatendekodierer empfangene Anzeigesignal angibt, dass die Dekodierung der Signalisierungsdaten fehlerfrei erfolgt ist, werden die von der Trennschaltung abgetrennten Informationsdaten des zugehörigen Datenrahmens und die dekodierte Dekodieranweisung zur Dekodierung der Informationsdaten durch die Speichersteuerung der RLC/MAC-Steuerschaltung in den RLC-Speicherbereich des Systemspeichers eingeschrieben. Anschließend sucht die Speichersteuerung der RLC/MAC-Steuerschaltung in dem RLC-Speicherbereich des Systemspeichers alle zwischengespeicherten Informationsdaten, die zu dem Datenrahmen mit der gleichen Datenrahmenidentifizierung gehören, und liest diese Informationsdaten aus dem Systemspeicher aus. Die ausgelesenen Informationsdaten werden über Datenleitungen dem Informationsdatendekodierer der Basisband-Steuereinheit zugeführt. Der Informationsdatendekodierer dekodiert sämtliche zugeleiteten Informationsdaten, die die gleiche Rahmenidentifizierung aufweisen. Dabei prüft der Informationsdatendekodierer, ob die Dekodierung der Informationsdaten zu der durch die Datendekodier-Steuerschaltung zugeführten Dekodieranweisung zur Dekodierung von Informationsdaten fehlerfrei erfolgt ist oder nicht. Der Informationsdatendekodierer gibt über eine Anzeigeleitung ein Anzeigesignal an die Datendekodiersteuerung der RLC/MAC-Steuerschaltung ab, welches anzeigt, ob die Dekodierung der Informationsdaten erfolgreich erfolgt ist oder nicht. Gibt das empfangene Anzeigesignal an, dass die Dekodierung der Informationsdaten durch den Informationsdatendekodierer erfolgreich abgeschlossen worden ist, gibt die Datendekodiersteuerung ein Steuersignal an den Informationsdatendekodierer ab, durch welches der Informationsdatendekodierer den Befehl erhält, die dekodierten Informationsdaten an den nachgeschalteten LLC-Block weiterzuleiten. Ferner gibt die Speichersteuerung der RLC/MAC-Steuerschaltung ein Steuersignal an den Systemspeicher ab, durch welches die in dem RLC-Speicherbereich zwischengespeicherten Informationsdaten, die durch den Informationsdatendekodierer fehlerfrei dekodiert worden sind, gelöscht werden.

Zeigt umgekehrt das von dem Informationsdatendekodierer abgegebene Anzeigesignal an, dass die Informationsdaten des Datenrahmens nicht fehlerfrei dekodiert worden sind, gibt die Datendekodiersteuerung ein Steuersignal an den Informationsdatendekodierer ab, das eine Weiterleitung der fehlerhaft dekodierten Informationsdaten an den nachgeschalteten LLC-Block verhindert. Die in dem RLC-Speicherbereich zwischengespeicherten kodierten Informationsdaten, die durch den Informationsdatendekodierer nicht erfolgreich dekodiert worden sind, werden nicht gelöscht. Ferner gibt die RLC/MAC-Steuerschaltung ein Steuersignal an einen Sender ab, der ein Anforderungssignal ARQ zur erneuten Übertragung des Datenrahmens an die Basisstation absendet.

Der in Fig. 3 gezeigte Empfänger nach dem Stand der Technik besitzt einen Signalisierungsdatendekodierer, der in dem DSP-Prozessor integriert ist, und einen Informationsdatendekodierer, der in der Basisband-Steuereinheit integriert ist. Der Signalisierungsdatendekodierer und der Informationsdatendekodierer sind zwar für die Dekodierung unterschiedlicher Daten, vorgesehen, nämlich einerseits der Dekodierung von Signalisierungsdaten und andererseits der Dekodierung von Informationsdaten, jedoch ist die schaltungstechnische Funktionalität der beiden Dekodierer gleich. Allerdings ist der schaltungstechnische Aufwand zur Implementierung des Signalisierungsdatendekodierers und des Informationsdatendekodierers sehr hoch.

Der Nachteil der in Fig. 3 dargestellten schaltungstechnischen Anordnung nach dem Stand der Technik besteht darin, dass zwei Datendekodierer vorgesehen werden müssen, und somit der schaltungstechnische Aufwand für dem Empfänger insgesamt sehr hoch ist.

Das Dokument "Adaptive two-level unequal error protection convolutional code scheme for wireless ATM networks" (von Sun Z. u.a., prasäntiert an der INFOCOM 2000) offenbart ein Verfahren zum Decodieren von Übertragungsrahmen wobei Kopf und Nutzlast mit komplemantär punktierten Faltungskoden kodiert werden. Daher wird nur eine Dekodierungsschaltung benötigt.

Es ist daher die Aufgabe der vorliegenden Erfindung, einen Empfänger zum Empfang von Datenrahmen zu schaffen, der mit geringem schaltungstechnischem Aufwand implementierbar ist.

Diese Aufgabe wird erfindungsgemäß durch einen Empfänger mit den im Patentanspruch 1 angegebenen Merkmalen gelöst.

Die Erfindung schafft.einen Empfänger zum Empfang von Datenrahmen, die jeweils Informationsdaten und Signalisierungsdaten enthalten, wobei die Signalisierungsdaten eine Datenrahmenidentifizierung und eine Dekodieranweisung zur Dekodierung der zugehörigen Informationsdaten umfassen, mit
einem Signaleingang zum Empfang der Datenrahmen, die über einen Übertragungskanal übertragen werden,
einer Datenrahmen-Trennschaltung zur Trennung der Signalisierungsdaten von den Informationsdaten,
einer steuerbaren Schalteinrichtung, die in Abhängigkeit von einem Steuersignal die an einem ersten Dateneingang der Schalteinrichtung anliegenden Signalisierungsdaten oder die an einem zweiten Dateneingang der Schalteinrichtung anliegenden Informationsdaten an einen Datenausgang der Schalteinrichtung durchschaltet,
einer mit dem Datenausgang der Schalteinrichtung verbundenen Kanaldekodierungsschaltung zur Dekodierung der anliegenden Daten, wobei die Kanaldekodierungsschaltung Anzeigesignale erzeugt, welche anzeigen, ob die Dekodierung der anliegenden

Daten durch die Kanaldekodierungsschaltung fehlerfrei erfolgt ist, und mit
einer Steuerschaltung, wobei die Steuerschaltung bei Empfang eines ersten Anzeigesignals, welches die fehlerfreie Dekodierung der Signalisierungsdaten eines Datenrahmens durch die Kanaldekodierungsschaltung anzeigt, die Informationsdaten, die Dekodieranweisung und die Datenrahmenidentifizierung in einem Speicher zwischenspeichert und ein Steuersignal an die Schalteinrichtung zum Durchschalten der zwischengespeicherten Informationsdaten an die Kanaldekodierungsschaltung abgibt,
wobei die Steuerschaltung bei Empfang eines zweiten Anzeigesignals, welches die fehlerfreie Dekodierung der Informationsdaten durch die Kanaldekodierungsschaltung anzeigt, die dekodierten Informationsdaten an eine nachgeschaltete Datenverarbeitungseinheit zur weiteren Datenverarbeitung abgibt.

Die Grundidee der vorliegenden Erfindung besteht darin, nur eine einzige Kanaldekodierungsschaltung vorzusehen, die sowohl die Dekodierung der Signalisierungsdaten als auch die. Dekodierung der Informationsdaten durchführt.

Hierdurch kann bei der Implementierung des erfindungsgemäßen Empfängers im Vergleich zu dem bisherigen Empfänger eine Dekodierschaltung eingespart werden und somit der schaltungstechnische Aufwand erheblich reduziert werden.

Die Datenrahmen werden durch den erfindungsgemäßen Empfänger vorzugsweise über eine Mobilfunkstrecke empfangen.

Dabei ist der Signaleingang des erfindungsgemäßen Empfängers vorzugsweise an eine Empfangsantenne zum Empfang der übertragenen Datenrahmen angeschlossen.

Die Datenrahmen sind vorzugsweise analog moduliert.

An die Empfangsantenne ist vorzugsweise ein HF-Demodulator zur Demodulation der empfangenen Datenrahmen angeschlossen.

Bei dem HF-Demodulator handelt es sich vorzugsweise um einen PSK-Demodulator.

Dem HF-Demodulator des erfindungsgemäßen Empfängers ist vorzugsweise eine analoge Bandpaßfilterbank zur Frequenzbandselektion nachgeschaltet.

Der analogen Bandpaßfilterbank ist vorzugsweise ein Analog-/Digitalwandler zur Umwandlung der demodulierten Datenrahmen in digitale Datenrahmen nachgeschaltet.

Dem Analog-/Digitalwandler ist vorzugsweise ein Entzerrer zur Entzerrung der über den Übertragungskanal übertragenen Daten nachgeschaltet.

Dem Entzerrer ist vorzugsweise eine Datenrahmen-Trennschaltung zur Trennung der Signalisierungsdaten von den Informationsdaten nachgeschaltet.

Bei einer bevorzugten Ausführungsform weist die Datenrahmen-Trennschaltung einen ersten Datenausgang zur Abgabe der Signalisierungsdaten und einen zweiten Datenausgang zur Abgabe der Informationsdaten auf.

Bei einer ersten Ausführungsform des erfindungsgemäßen Empfängers ist der zweite Datenausgang der Datenrahmen-Trennschaltung mit einem Zwischenspeicher zum Zwischenspeichern der abgetrennten Informationsdaten verbunden.

Dabei ist der Zwischenspeicher vorzugsweise mit dem zweiten Dateneingang der steuerbaren Schalteinrichtung verbunden.

Der erste Datenausgang der Datenrahmen-Trennschaltung ist vorzugsweise mit dem ersten Dateneingang der steuerbaren Schalteinrichtung verbunden.

Bei einer bevorzugten Ausführungsform des erfindungsgemäßen Empfängers ist der Entzerrer, die Datenrahmen-Trennschaltung, die steuerbare Schalteinrichtung und die Kanaldekodierungsschaltung in einem digitalen Signalprozessor integriert.

Bei einer ersten Ausführungsform des erfindungsgemäßen Empfängers ist zusätzlich der Zwischenspeicher in dem digitalen Signalprozessor integriert.

Bei der ersten Ausführungsform des erfindungsgemäßen Empfängers besteht die Steuerschaltung aus einer in dem digitalen Signalprozessor integrierten ersten Steuereinheit und aus einer in einer Basisband-Steuereinheit integrierten zweiten. Steuereinheit,
wobei die erste Steuereinheit das erste Anzeigesignal von der in dem digitalen Signalprozessor integrierten Kanaldekodierungsschaltung empfängt und in Abhängigkeit von dem ersten Anzeigesignal die steuerbare Schalteinrichtung und den ebenfalls in dem digitalen Signalprozessor integrierten Zwischenspeicher ansteuert,
wobei die zweite Steuereinheit in Abhängigkeit von dem zweiten Anzeigesignal, das von der in dem digitalen Signalprozessor integrierten Kanaldekodierungsschaltung erzeugt wird, die dekodierten Informationsdaten an eine in der Basisband-Steuereinheit integrierte LLC-Schaltung abgibt.

Die bei der ersten Ausführungsform des erfindungsgemäßen Empfängers in dem digitalen Signalprozessor integrierte erste Steuereinheit weist vorzugsweise eine Speichersteuerung zur Ansteuerung des ebenfalls in dem digitalen Signalprozessor integrierten Zwischenspeichers auf.

Bei einer zweiten bevorzugten Ausführungsform des erfindungsgemäßen Empfängers ist die Steuerschaltung in der Basisband-Steuereinheit integriert.

Die in der Basisband-Steuereinheit integrierte Steuerschaltung speichert dabei vorzugsweise die von der Datentrennschaltung abgegebenen Informationsdaten, die Dekodieranweisung zur Dekodierung der Informationsdaten und die Datenrahmenidentifizierung in einem Systemspeicher zwischen, der ebenfalls in der Basisband-Steuereinheit integriert ist, wobei das Zwischenspeichern durch die integrierte Steuerschaltung in Abhängigkeit von einem ersten Anzeigesignal erfolgt, das von der in dem digitalen Signalprozessor integrierten Kanaldekodierungsschaltung abgegeben wird und das die fehlerfreie Dekodierung der Signalisierungsdaten durch die Kanaldekodierungsschaltung anzeigt.

Die bei der zweiten bevorzugten Ausführungsform des erfindungsgemäßen Empfängers in der Basisband-Steuereinheit integrierte Steuerschaltung steuert vorzugsweise in Abhängigkeit von dem ersten Anzeigesignal die in dem digitalen Signalprozessor integrierte Schalteinrichtung derart an, dass sie die zwischengespeicherten.Informationsdaten an die ebenfalls in dem digitalen Signalprozessor integrierte Kanaldekodierungsschaltung durchschaltet.

Die Basisband-Steuereinheit der integrierten Steuerschaltung weist bei der zweiten bevorzugten Ausführungsform des erfindungsgemäßen Empfängers eine Speichersteuerung zur Ansteuerung des Systemspeichers auf, der ebenfalls in der Basisband-Steuereinheit integriert ist.

Dabei gibt die in der Basisband-Steuereinheit integrierte Steuerschaltung in Abhängigkeit von dem zweiten Steuersignal, das von der in dem digitalen Signalprozessor integrierten Kanaldekodierungsschaltung abgegeben wird und das die fehlerfreie Dekodierung der Informationsdaten durch die Kanaldekodierungsschaltung anzeigt, die dekodierten Informationsdaten an eine in der Basisband-Steuereinheit integrierte LLC-Schaltung ab.

Die Kanaldekodierungsschaltung des erfindungsgemäßen Empfängers dekodiert in Abhängigkeit von einem von der Steuerschaltung empfangenen Steuersignal die anliegenden Daten entsprechend einer ersten Dekodierungsanweisung zur Dekodierung von Signalisierungsdaten oder entsprechend einer zweiten Dekodierungsanweisung zur Dekodierung von Informationsdaten.

Bei einer bevorzugten Ausführungsform empfängt die Kanaldekodierungsschaltung die Dekodierungsanweisung von der Steuerschaltung über Steuerleitungen.

Bei dem erfindungsgemäßen Empfänger handelt es sich vorzugsweise um einen EGPRS-Empfänger.

Bei einer besonders bevorzugten Ausführungsform ist der erfindungsgemäße Empfänger in einem mobilen Telefon eingebaut.

Bei einer alternativen Ausführungsform des erfindungsgemäßen Empfängers ist der Signaleingang des Empfängers an eine Signalleitung zum Empfang von übertragenen Datenrahmen angeschlossen.

Im weiteren werden bevorzugte Ausführungsformen des erfindungsgemäßen Empfängers unter Bezugnahme auf die beigefügten Figuren zur Erläuterung erfindungswesentlicher Merkmale beschrieben.

Es zeigen:
Fig. 1 ein schematisches Diagramm eines mobilen Telefons mit einem Empfänger nach dem Stand der Technik;
Fig. 2 ein ARQ2-Verfahren für EGPRS-Empfänger nach dem Stand der Technik;
Fig. 3 ein Blockschaltbild eines Empfängers zum Empfang von Datenrahmen nach dem Stand der Technik;
Fig. 4 eine erste Ausführungsform des erfindungsgemäßen Empfängers;
Fig. 5 eine zweite bevorzugte Ausführungsform des erfindungsgemäßen Empfängers.

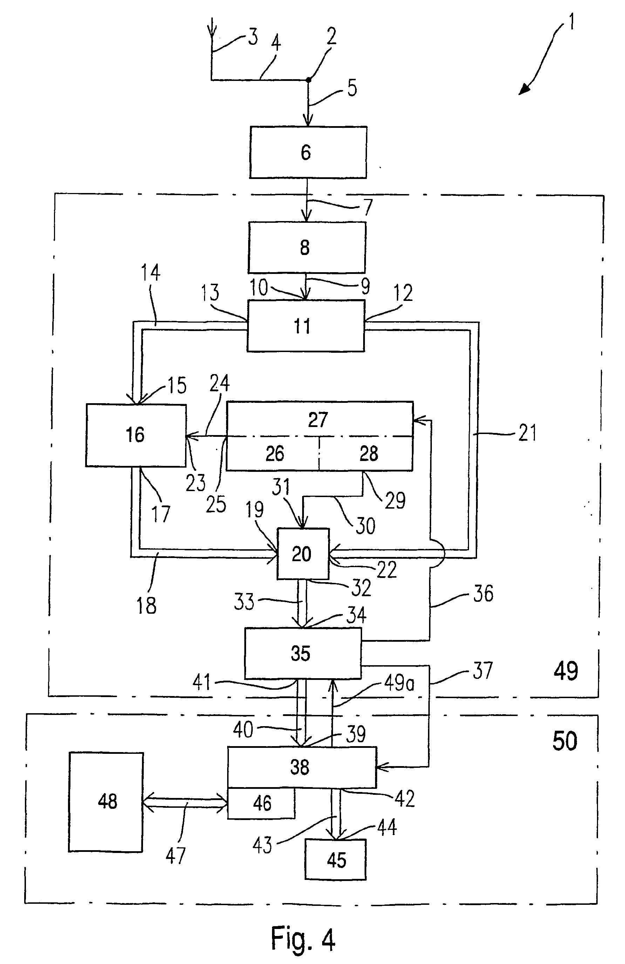

Die Fig. 4 stellt eine erste Ausführungsform des erfindungsgemäßen Empfängers dar. Der Empfänger 1 weist einen Signaleingang 2 zum Empfang von Datenrahmen auf, die über einen Übertragungskanal übertragen werden. Bei dem in Fig. 4 gezeigten Beispiel werden die Datenrahmen über eine Mobilfunkstrecke von einer Basisstation übertragen und durch einen Antenne 3 eines Mobilfunktelefons empfangen, das den in Fig. 4 dargestellten Empfänger 1 enthält. Der Signaleingang 2 des Empfängers 1 ist über eine.Signalleitung 4 an die Empfangsantenne 3 angeschlossen. Die über den Signaleingang 2 des Empfängers 1 empfangenen Datenrahmen enthalten Informationsdaten und Signalisierungsdaten. Dabei umfassen die Signalisierungsdaten eine Datenrahmenidentifizierung bzw. Datennummer und eine Dekodieranweisung zur Dekodierung der zugehörigen, in dem Datenrahmen enthaltenen Informationsdaten.

Die empfangenen Datenrahmen sind analog modulierte Datenrahmen, die von dem analogen Signaleingang 2 des erfindungsgemä-ßen Empfängers über eine Signalleitung 5 einer Signalaufbereitungsschaltung 6 zugeführt werden. Die Signalaufbereitungsschaltung 6 enthält einen HF-Demodulator zur Demodulation der empfangenen Datenrahmen. Bei dem HF-Demodulator handelt es sich vorzugsweise um einen PSK-Demodulator. Ferner enthält die Signalaufbereitungsschaltung 6 eine dem HF-Demodulator nachgeschaltete analoge Bandpaßfilterbank zur Frequenzbandselektion des empfangenen Signals. Die analoge Bandpaßfilterbank ist ausgangsseitig mit einem Analog-/Digitalwandler zur Umwandlung der demodulierten Datenrahmen in digitale Datenrahmen verbunden.

Die demodulierten digitalen Datenrahmen werden von der Signalaufbereitungsschaltung 6 über eine Leitung 7 an einen Entzerrer 8 abgegeben, der zur Entzerrung der über den Übertragungskanal übertragenen Daten vorgesehen ist. Die entzerrten digitalen Datenrahmen werden von dem Entzerrer 8 über eine Leitung 9 an einen Dateneingang 10 einer Datenrahmen-Trennschaltung 11 abgegeben. Die Datenrahmen-Trennschaltung 11 besitzt einen ersten Datenausgang 12 zur Abgabe der abgetrennten Signalisierungsdaten des Datenrahmens und einen zweiten Datenausgang 13 zur Abgabe der abgetrennten Informationsdaten eines zugeführten digitalen Datenrahmens. Die Datenrahmen-Trennschaltung 11 trennt den am Dateneingang 10 anliegenden Datenrahmen in Signalisierungsdaten und in zugehörige Informationsdaten. Die Informationsdaten werden von dem zweiten Datenausgang 13 der Datenrahmen-Trennschaltung 11 über Datenleitungen 14 an einen Dateneingang 15 eines Zwischenspeichers 16 abgegeben. Der Zwischenspeicher 16 besitzt einen Datenausgang 17, der über Datenleitungen 18 mit einem Dateneingang 19 einer steuerbaren Schalteinrichtung 20 verbunden ist.

Der erste Datenausgang 12 der Datenrahmen-Trennschaltung 11 ist über Datenleitungen 21 direkt mit einem weiteren Dateneingang 22 der steuerbaren Schalteinrichtung 20 verbunden. Der Zwischenspeicher 16 ist zum Zwischenspeichern der von der Datenrahmen-Trennschaltung 11 abgegebenen Informationsdaten vorgesehen. Der Zwischenspeicher 16 besitzt einen Steuereingang 23, der über eine Steuerleitung 24 mit einem Steuerausgang 25 einer Speichersteuerung 26 verbunden ist, die in einer RLC/MAC-Steuerschaltung 27 enthalten ist. Die RLC/MAC-Steuerschaltung 27 enthält ferner eine Datendekodiersteuerung 28, die über einen Steuerausgang 29 und eine Steuerleitung 30 an einen Steuereingang 31 der Schalteinrichtung 20 angeschlossen ist. Die Speichersteuerung 26 der RLC/MAC-Steuerschaltung 27 steuert den Zwischenspeicher 16, und die Datendekodiersteuerung 28 der RLC/MAC-Steuerschaltung 27 steuert das Umschalten zwischen den beiden Dateneingängen 19, 22 der steuerbaren Schalteinrichtung 20. Die steuerbare Schalteinrichtung 20 besitzt einen Datenausgang 32, der über Datenleitungen 33 an einen Dateneingang 34 einer Kanaldekodierungsschaltung 35 angeschlossen ist. In Abhängigkeit von dem durch die Dekodiersteuerung 28 abgegebenen Steuersignal werden entweder die an dem Dateneingang 19 der Schalteinrichtung 20 anliegenden, aus dem Zwischenspeicher 16 ausgelesenen Informationsdaten oder die an dem anderen Dateneingang 22 anliegenden Informationsdaten an den Datenausgang 32 der Schalteinrichtung 20 und somit an den Dateneingang 34 der nachgeschalteten Kanaldekodierungsschaltung 35 durchgeschaltet.

Bei Empfang eines Datenrahmens ist zunächst der Dateneingang 22 der Schalteinrichtung 20 an den Datenausgang 32 durchgeschaltet, so dass die von der Datenrahmen-Trennschaltung abgetrennten Signalisierungsdaten an die Kanaldekodierungsschaltung durchgeschaltet werden. Die zugehörigen, durch die Datenrahmen-Trennschaltung 11 abgetrennten Informationsdaten werden gesteuert durch die Speichersteuerung 26 in dem Zwischenspeicher 16 zwischengespeichert. Die Kanaldekodierungsschaltung 35 führt eine Dekodierung der an dem Eingang 34 anliegenden Signalisierungsdaten durch und überprüft anhand von redundanten Daten, die in den Signalisierungsdaten enthalten sind, ob die Dekodierung fehlerfrei erfolgt ist oder nicht. Die Kanaldekodierungsschaltung 35 gibt über eine Signalisierungsleitung 36 ein erstes Anzeigesignal an die RLC/MAC-Steuerschaltung 27 ab, welches anzeigt, ob die Dekodierung der Signalisierungsdaten des empfangenen Datenrahmens fehlerfrei bzw. erfolgreich durch die Kanaldekodierungsschaltung 35 durchgeführt worden ist.

Sind die Signalisierungsdaten durch die Kanaldekodierungsschaltung 35 nicht erfolgreich bzw. fehlerfrei dekodiert worden, wird der nächste Datenrahmen durch den Empfänger 1 verarbeitet, und die Speichersteuerung 26 steuert den Zwischenspeicher 16 derart an, dass die Informationsdaten des nächsten Datenrahmens in den Zwischenspeicher 16 eingeschrieben werden. Zeigt umgekehrt das über die Signalleitung 36 übertragene Anzeigesignal an, dass die Dekodierung der Signaiisierungsdaten durch die Kanaldekodierungsschaltung 35 fehlerfrei erfolgt ist, werden die in dem Zwischenspeicher 16 zwischengespeicherten Informationsdaten des zugehörigen Datenrahmens durch Ansteuern der umschaltbaren Schalteinrichtung 20 über die Datenleitungen 18, 33 an die Kanaldekodierungsschaltung 35 durchgeschaltet. Die Kanaldekodierungsschaltung 35 führt mittels einer Dekodieranweisung zur Dekodierung der zugeführten Informationsdaten eine Dekodierung der durchgeschalteten Informationsdaten durch. Dabei wird die Dekodieranweisung verwendet, die bei der Dekodierung der Signalisierungsdaten gewonnen worden ist. Die Kanaldekodierungsschaltung 35 führt die Dekodierung der Informationsdaten durch und prüft mittels redundanter Daten, ob die Dekodierung der Informationsdaten fehlerfrei erfolgt ist oder nicht. Die Kanaldekodierungsschaltung 35 gibt ein entsprechendes zweites Anzeigesignal, das die fehlerfreie Dekodierung der Informationsdaten anzeigt, über eine Signalisierungsleitung 37 an eine weitere RLC/MAC-Steuerschaltung 38 ab. Die RLC/MAC-Steuerschaltung 38 weist einen Dateneingang 39 auf, der über Datenleitungen 40 mit einem Datenausgang 41 der Kanaldekodierungsschaltung 35 verbunden ist. Ferner ist die RLC/MAC-Steuerschaltung 35 über einen Datenausgang 42 und Datenleitungen 43 mit einem Dateneingang 44 einer nachgeschalteten LLC-Steuerschaltung 45 verbunden. Die RLC/MAC-Steuerschaltung 38 enthält eine Speichersteuerung 46, die über Daten- und Steuerleitungen 47 an den Systemspeicher 48 angeschlossen ist. Darüber hinaus steuert die RLC/MAC-Steuerschaltung 38 über Steuerleitungen 49a die Kanaldekodierungsschaltung 35 an.

Gibt das über die Signalisierungsleitung 37 übertragene zweite Anzeigesignal an, dass eine fehlerfreie Dekodierung der Informationsdaten durch die Kanaldekodierungsschaltung 35 erfolgt ist, leitet die RLC/MAC-Steuerschaltung 38 die an dem Dateneingang 39 anliegenden dekodierten Informationsdaten über den Datenausgang 42 und die Datenleitungen 43 an den Dateneingang 44 der nachgeschalteten LLC-Schaltung 45 zur weiteren Datenverarbeitung weiter.

Gibt das an der Signalisierungsleitung 37 anliegende zweite Anzeigesignal umgekehrt an, dass die Dekodierung der Informationsdaten nicht fehlerfrei erfolgt ist bzw. fehlgeschlagen ist, werden die am Signaleingang 39 anliegenden dekodierten Informationsdaten nicht durch die RLC/MAC-Steuerschaltung 38 an den nachgeschalteten LLC-Block 45 weitergeleitet und verworfen. Die zugehörigen Informationsdaten verbleiben in dem Zwischenspeicher 16, und die RLC/MAC-Steuerschaltung 38 gibt ein Steuersignal an einen in dem Empfänger 1 enthaltenen Sender ab, der ein Anforderungssignal an die Basisstation zur erneuten Übertragung.desjenigen Datenrahmens überträgt, dessen Dekodierung fehlgeschlagen ist.

Bei der in Fig. 4 dargestellten ersten Ausführungsform sind der Entzerrer 8, die Datenrahmen-Trennschaltung 11, der Zwischenspeicher 16, die erste RLC/MAC-Steuerschaltung 27, die steuerbare Schalteinrichtung 20 und die Kanaldekodierungsschaltung 35 in einem digitalen Signalprozessor 49 (DSP) integriert. Demgegenüber ist die zweite RLC/MAC-Steuerschaltung 38 mit ihrer Speichersteuerung 46, der Systemspeicher 48 und der nachgeschaltete LLC-Block 45 in einer Basisband-Steuereinheit 50 integriert.

Wie man durch Vergleich des herkömmlichen Empfängers, wie er in Fig. 3 dargestellt ist, und der ersten Ausführungsform des erfindungsgemäßen Empfängers 1, wie sie in Fig. 4 dargestellt ist, feststellen kann, benötigt der erfindungsgemäße Empfänger 1 lediglich eine Kanaldekodierungsschaltung 35, die sowohl zur Dekodierung der Signalisierungsdaten als auch zur Dekodierung der Informationsdaten eingesetzt wird. Dabei ist die Kanaldekodierungsschaltung 35 zwischen einem ersten Betriebsmodus zur Dekodierung von Signalisierungsdaten in einen zweiten Betriebsmodus zur Dekodierung von Informationsdaten umschaltbar. Zunächst erfolgt die Dekodierung der Signalisierungsdaten, die in dekodierter Form auch die Dekodierungsanweisung zur Dekodierung der zugehörigen Informationsdaten enthalten. Die bei der Dekodierung der Signalisierungsdaten gewonnene Dekodierungsanweisung zur Dekodierung der zugehörigen Informationsdaten wird durch die Kanaldekodierungsschaltung 35 dann zur Dekodierung der Informationsdaten eingesetzt. Die Dekodierung der empfangenen Datenrahmen erfolgt somit bei einem erfindungsgemäßen Empfänger mittels einer einzigen Kanaldekodierungsschaltung 35 in zwei aufeinanderfolgenden Dekodierungsschritten. Da der erfindungsgemäße Empfänger 1 nur eine Kanaldekodierungsschaltung 35 beinhaltet, die sowohl die Signalisierungsdaten als auch die Informationsdaten eines empfangenen Datenrahmens dekodiert, ist der schaltungstechnische Aufwand gegenüber dem herkömmlichen Empfänger, wie er in Fig. 3 dargestellt ist, gering.

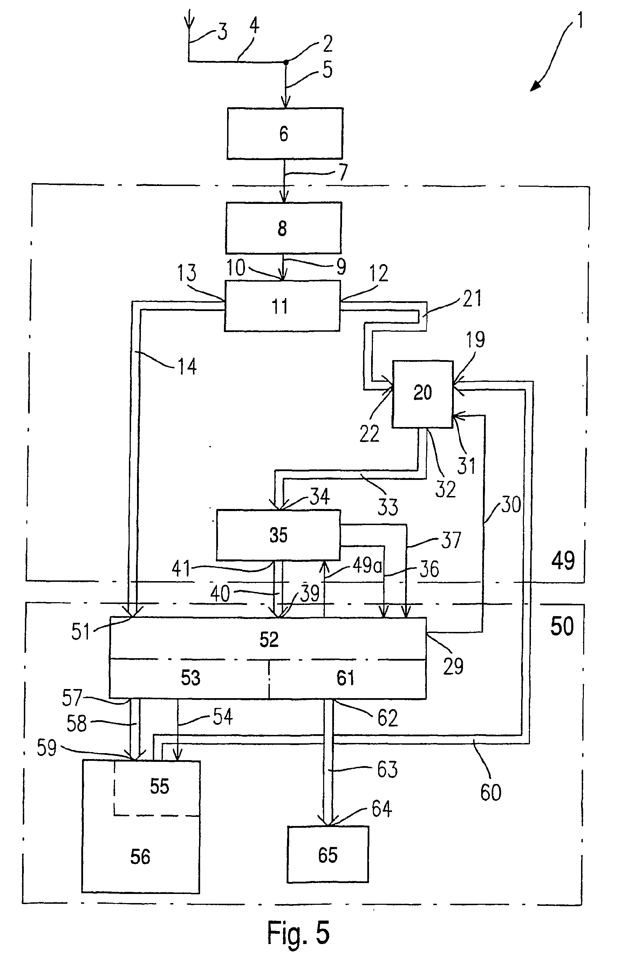

Fig. 5 zeigt eine zweite, besonders bevorzugte Ausführungsform des erfindungsgemäßen Empfängers 1 zum Empfang von Datenrahmen. Der in Fig. 5 dargestellte Empfänger 1 gemäß der zweiten Ausführungsform besitzt wie die erste Ausführungsform, die in Fig. 4 dargestellt worden ist, eine Signalaufbereitungsschaltung 6, einen Entzerrer 8 und eine Datenrahmen-Trennschaltung 11. Bei der in Fig. 5 dargestellten zweiten bevorzugten Ausführungsform werden die Signalisierungsdaten von dem Datenausgang 12 der Datenrahmen-Trennschaltung 11 über Datenleitungen 21 einem Dateneingang 22 einer steuerbaren Schalteinrichtung 20 zugeführt. Die an dem zweiten Datenausgang 13 der Datenrahmen-Trennschaltung 11 abgegebenen Informationsdaten werden bei der zweiten Ausführungsform des erfindungsgemäßen Empfängers 1 über Datenleitungen 14 direkt an einen Dateneingang 51 einer RLC/MAC-Steuerschaltung 52 innerhalb der Basisband-Steuereinheit 50 abgegeben. Die RLC/MAC-Steuerschaltung 52 besitzt einen weiteren Dateneingang 39, der, wie bei der ersten Ausführungsform, mit dem Datenausgang 41 der Kanaldekodierungsschaltung 35 verbunden ist. Die RLC/MAC-Steuerschaltung 52 steuert über eine Steuerleitung 30 die umschaltbare Steuereinheit 20 innerhalb des DSP-Prozessors 49 an. Darüber hinaus empfängt die RLC/MAC-Steuerschaltung 52 über eine Signalisierungsleitung 36 ein erstes Anzeigesignal, dass die fehlerfreie Dekodierung der Signalisierungsdaten durch die Kanaldekodierungsschaltung 35 anzeigt und über eine Signalisierungsleitung 37 ein zweites Anzeigesignal, das die fehlerfreie Dekodierung von Informationsdaten durch die Kanaldekodierungsschaltung 35 anzeigt. Die RLC/MAC-Steuerschaltung 52 enthält eine Speichersteuerung 53, die über Steuerleitungen 54 das Einschreiben und das Auslesen von Informationsdaten in einen dynamisch adressierbaren Speicherbereich 55 eines. Systemspeichers 56 der Basisband-Steuereinheit 50 steuert. Die RLC/MAC-Steuerschaltung 52 besitzt ferner einen Datenausgang 57, der über Datenleitungen 58 mit einem Datenein- und -ausgang 59 des Systemspeichers 56 verbunden ist. Der Datenein- und -ausgang 59 des Systemspeichers 56 ist ferner über Datenleitungen 60 an den Dateneingang 19 der umschaltbaren Steuerschaltung 20 angeschlossen.

Die RLC/MAC-Steuerschaltung 52 enthält eine Datendekodiersteuerung 57, die die Datendekodierung durch die Kanaldekodierungsschaltung 35 über die Steuerleitung 49 steuert.

Die RLC/MAC-Steuerschaltung 52 weist einen Datenausgang 62 auf, über den die an dem Dateneingang 39 anliegenden dekodierten Informationsdaten über Datenleitungen 63 an einen Dateneingang 64 eines nachgeschalteten LLC-Blocks 65 zur weiteren Datenverarbeitung weiterleitbar sind.

Im weiteren wird die Funktionsweise der in Fig. 5 dargestellten bevorzugten Ausführungsform des erfindungsgemäßen Empfängers 1 erläutert. Zunächst wird die steuerbare Schalteinrichtung 20 durch die RLC/MAC-Steuerschaltung 52 über die Steuerleitung 30 derart angesteuert, dass die an dem Signaleingang 22 anliegenden Signalisierungsdaten an die Kanaldekodierungsschaltung 35 durchgeschaltet werden. Die RLC/MAC-Steuerschaltung 52 signalisiert der Kanaldekodierungsschaltung 35 über die Steuerleitung 49, dass Signalisierungsdaten entsprechend einer vorgegebenen Dekodieranweisung für Signalisierungsdaten durchzuführen ist. Die Kanaldekodierungsschaltung 35 führt die Dekodierung der an dem Dateneingang 34 anliegenden Signalisierungsdaten entsprechend der Dekodierungsanweisung durch und prüft anschließend mittels redundanter Signalisierungsdaten, ob die Dekodierung der Signalisierungsdaten fehlerfrei erfolgt ist oder nicht. Die Kanaldekodierungsschaltung 35 gibt ein entsprechendes Anzeigesignal über die Anzeigeleitung 36 an die RLC/MAC-Steuerschaltung 52 ab. Zeigt das empfangene Anzeigesignal an, dass die Dekodierung der Signalisierungsdaten fehlerfrei erfolgt ist, werden die zugehörigen Informationsdaten, die an dem Dateneingang 51 der RLC/MAC-Steuerschaltung 52 anliegen, durch die Speichersteuerung 53 über die Datenleitungen 58 in den RLC-Speicherbereich 55 des Systemspeichers 56 dynamisch adressiert eingeschrieben. Ferner gibt die RLC/MAC-Steuerschaltung 52 ein Steuersignal über die Steuerleitung 30 an die Schalteinrichtung 20 ab, durch das der andere Dateneingang 19 an den Datenausgang 32 der Steuerschaltung durchgeschaltet wird. Die Speichersteuerung 53 sucht in dem RLC-Speicherbereich 55 alle zwischengespeicherten Informationsdaten, die zu einem Datenrahmen mit der gleichen Datenrahmenidentifizierung gehören, und liest diese Informationsdaten über den Datenein- und -ausgang 59 des Systemspeichers 56 über die Datenleitungen 60 an den Dateneingang 19 der Schalteinrichtung 20 aus. Anschließend führt die Kanaldekodierungsschaltung 35 eine Dekodierung über alle aus dem Speicher 56 ausgelesenen Informationsdaten, die zu einem Datenrahmen mit der gleichen Datenrahmenidentifizierung gehören, durch und prüft anhand redundanter Daten, ob die Dekodierung der Informationsdaten fehlerfrei erfolgt ist oder nicht. Über die Signalisierungsleitung 37 gibt die Kanaldekodierungsschaltung 35 ein Anzeigesignal an die RLC/MAC-Steuerschaltung 52 ab, welches anzeigt, ob die Dekodierung der Informationsdaten fehlerfrei erfolgt ist oder nicht.

Falls das Anzeigesignal angibt, dass die Dekodierung der Informationsdaten durch die Kanaldekodierungsschaltung 35 fehlerfrei erfolgt ist, gibt die RLC/MAC-Steuerschaltung 52 die an dem Dateneingang 39 anliegenden dekodierten Informationsdaten über den Datenausgang 62 an die nachgeschaltete LLC-Schaltung 65 zur weiteren Datenverarbeitung ab. Gleichzeitig löscht die Speichersteuerung 53 die zugehörigen, erfolgreich dekodierten Informationsdaten in dem RLC-Speicherbereich 55 des Systemspeichers 56.

Zeigt umgekehrt das an der Signalisierungsleitung 37 anliegende Anzeigesignal an, dass die Dekodierung der Informationsdaten durch die Kanaldekodierungsschaltung 35 nicht fehlerfrei erfolgt ist, werden die zugehörigen Informationsdaten in dem Speicherbereich 55 nicht gelöscht, und die an dem Dateneingang 39 anliegenden fehlerhaft dekodierten Informationsdaten werden durch die RLC/MAC-Steuerschaltung 52 verworfen bzw. nicht an den nachgeschalteten LLC-Block 65 weitergeleitet. Ferner gibt die RLC/MAC-Steuerschaltung 52 ein Steuersignal an einen Sender des erfindungsgemäßen Empfängers ab, der ein Anforderungssignal zur erneuten Übertragung des fehlerhaft dekodierten Datenrahmens an die Basisstation absendet.

Die in Fig. 5 dargestellte zweite Ausführungsform des erfindungsgemäßen Empfängers 1 hat gegenüber der in Fig. 4 dargestellten ersten Ausführungsform den Vorteil, dass kein Zwischenspeicher 16 in dem DSP-Prozessor 49 vorgesehen werden muß. Die Zwischenspeicherung erfolgt bei der in Fig. 5 dargestellten bevorzugten Ausführungsform in dem sowieso vorhandenen Systemspeicher 56 der Basisband-Steuereinheit 50. Da auf den Systemspeicher 56 der Basisband-Steuereinheit 50 weitere Baugruppen Zugriff haben, kann der RLC-Speicherbereich 55 auch für weitere Anwendungen eingesetzt werden.

Ein weiterer Vorteil der in Fig. 5 dargestellten zweiten Ausführungsform besteht darin, dass diese Ausführungsform lediglich eine RLC/MAC-Steuerschaltung 52 aufweist, die in der Basisband-Steuereinheit 50 enthalten ist. Die bei der in Fig. 4 dargestellten ersten Ausführungsform in dem DSP-Prozessor 49 enthaltene RLC/MAC-Steuerschaltung 27 wird bei der in Fig. 5 dargestellten zweiten Ausführungsform nicht mehr benötigt, so dass der schaltungstechnische Aufwand insgesamt bei der zweiten Ausführungsform geringer ist.

Die in den beiden Figuren 4, 5 dargestellten Empfänger werden zum Empfang von Datenrahmen eingesetzt, die über eine Mobilfunkstrecke übertragen werden. Der erfindungsgemäße Empfänger 1 ist jedoch auch bei Anwendungen einsetzbar, bei denen die Datenrahmen über eine feste Signalleitung an den Signaleingang 2 des Empfängers 1 übertragen werden.

### Bezugszeichenliste

- 1: Empfänger
- 2: Signaleingang
- 3: Antenne
- 4: Signalleitung
- 5: Leitung
- 6: Signalaufbereitungsschaltung
- 7: Leitung
- 8: Entzerrer
- 9: Leitung
- 10: Dateneingang
- 11: Datenrahmen-Trennschaltung
- 12: Datenausgang
- 13: Datenausgang
- 14: Datenleitungen
- 15: Dateneingang
- 16: Zwischenspeicher
- 17: Datenausgang
- 18: Datenleitungen
- 19: Dateneingang
- 20: Schalteinrichtung
- 21: Datenleitungen
- 22: Dateneingang
- 23: Steuereingang
- 24: Steuerleitung
- 25: Steuerausgang
- 26: Speichersteuerung
- 27: RLC/MAC-Steuerschaltung
- 28: Datendekodiersteuerung
- 29: Steuerausgang
- 30: Steuerleitung
- 31: Steuereingang
- 32: Datenausgang
- 33: Datenleitung
- 34: Dateneingang
- 35: Kanaldekodierungsschaltung
- 36: Anzeigeleitung
- 37: Anzeigeleitung
- 38: RLC/MAC-Steuerschaltung
- 39: Dateneingang
- 40: Datenleitungen
- 41: Datenausgang
- 42: Datenausgang
- 43: Datenleitungen
- 44: Dateneingang
- 45: LLC-Schaltung
- 46: Speichersteuerung
- 47: Datensteuerleitungen
- 48: Systemspeicher
- 49: DSP-Prozessor
- 49a: Steuerleitung
- 50: Basisbandsteuereinheit
- 51: Dateneingang
- 52: RLC/MAC-Steuerschaltung
- 53: Speichersteuerung
- 54: Steuerleitung
- 55: RLC-Speicherbereich
- 56: Systemspeicher
- 57: Datenausgang
- 58: Datenleitung
- 59: Speicherdatenein- und -ausgang
- 60: Datenleitungen
- 61: Datendekodiersteuerung
- 62: Datenausgang
- 63: Datenleitungen
- 64: Dateneingang
- 65: LLC-Schaltung

## Patentansprüche

1. Empfänger zum Empfang von Datenrahmen, die Informationsdaten und Signalisierungsdaten enthalten, wobei die Signalisierungsdaten eine Datenrahmenidentifizierung und eine Dekodieranweisung zur Dekodierung der Informationsdaten umfassen, mit:
(a) einem Signaleingang (2) zum Empfang von Datenrahmen, die über einen Übertragungskanal übertragen werden,
(b) einer Datenrahmen-Trennschaltung (11) zur Trennung der Signalisierungsdaten von den Informationsdaten, und
(c) einer steuerbaren Schalteinrichtung (20), die in Abhängigkeit von einem Steuersignal die an einem ersten Dateneingang (22) der Schalteinrichtung (20) anliegenden Signalisierungsdaten oder die an einem zweiten Dateneingang (19) der Schalteinrichtung (20) anliegenden Informationsdaten an einen Datenausgang (32) der Schalteinrichtung (20) durchschaltet;
(d) einer mit dem Datenausgang (32) der Schalteinrichtung (20) verbundenen Kanaldekodierungsschaltung (35) zur Dekodierung der anliegenden Daten, wobei die Kanaldekodierungsschaltung Anzeigesignale erzeugt, welche anzeigen, ob die Dekodierung der anliegenden Daten durch die Kanaldekodierungsschaltung (35) fehlerfrei erfolgt ist; und mit
(e) einer Steuerschaltung (27, 38),
wobei die Steuerschaltung aus einer in einem digitalen Signalprozessor (49) integrierten ersten Steuereinheit (27) und aus einer in einer Basisband-Steuereinheit (50) integrierten zweiten Steuereinheit (38) besteht,
wobei die erste Steuereinheit (27) bei Empfang eines von der Kanaldekodierungsschaltung erzeugten ersten Anzeigesignals, welches die fehlerfreie Dekodierung der Signalisierungsdaten eines Datenrahmens anzeigt, die Informationsdaten, die Dekodieranweisung zur Dekodierung der Informationsdaten und die Datenrahmenidentifizierung in einem Speicher (16) zwischenspeichert und ein Steuersignal an die Schalteinrichtung (20) zum Durchschalten der zwischengespeicherten Informationsdaten an die Kanaldekodierungsschaltung (35) abgibt,
wobei die zweite Steuereinheit (38) bei Empfang eines von dem durch die Kanaldekodierungsschaltung (35) erzeugten zweiten Anzeigesignals, welches die fehlerfreie Dekodierung der Informationsdaten durch die Kanaldekodierungsschaltung (35) anzeigt, die dekodierten Informationsdaten an eine in der Basisband-Steuereinrichtung (50) integrierte LLC-Schaltung (45) abgibt.

2. Empfänger nach Anspruch 1,
**dadurch gekennzeichnet,**
**dass** die Datenrahmen über eine Mobilfunkstrecke empfangen werden.

3. Empfänger nach Anspruch 1 oder 2,
**dadurch gekennzeichnet,**
**dass** der Signaleingang (2) an eine Empfangsantenne (3) zum Empfang der übertragenen Datenrahmen angeschlossen ist.

4. Empfänger nach einem der vorangehenden Ansprüche,
**dadurch gekennzeichnet,**
**dass** die Datenrahmen analog moduliert übertragen werden.

5. Empfänger nach einem der vorangehenden Ansprüche,
**dadurch gekennzeichnet,**
**dass** an die Empfangsantenne (3) ein HF-Demodulator zur Demodulation der empfangenen Datenrahmen angeschlossen ist.

6. Empfänger nach einem der vorangehenden Ansprüche,
**dadurch gekennzeichnet,**
**dass** der HF-Demodulator ein PSK-Demodulator ist.

7. Empfänger nach einem der vorangehenden Ansprüche,
**dadurch gekennzeichnet,**
**dass** der HF-Demodulator eine analoge Bandpaßfilterbank zur Frequenzbandselektion nachgeschaltet ist.

8. Empfänger nach einem der vorangehenden Ansprüche,
**dadurch gekennzeichnet,**
**dass** der analogen Bandpaßfilterbank ein Analog-/Digitalwandler zur Umwandlung der demodulierten Datenrahmen in digitale Datenrahmen nachgeschaltet ist.

9. Empfänger nach einem der vorangehenden Ansprüche,
**dadurch gekennzeichnet,**
**dass** dem Analog-/Digitalwandler ein Entzerrer zur Entzerrung der über den Übertragungskanal übertragenen Daten nachgeschaltet ist.

10. Empfänger nach einem der vorangehenden Ansprüche,
**dadurch gekennzeichnet,**
**dass** dem Entzerrer die Datenrahmen-Trennschaltung (11) zur Trennung der Signalisierungsdaten von den Informationsdaten nachgeschaltet ist.

11. Empfänger nach einem der vorangehenden Ansprüche,
**dadurch gekennzeichnet,**
**dass** die Datenrahmen-Trennschaltung (11) einen ersten Datenausgang (12) zur Abgabe der Signalisierungsdaten und einen zweiten Datenausgang (13) zur Abgabe der Informationsdaten aufweist.

12. Empfänger nach einem der vorangehenden Ansprüche,
**dadurch gekennzeichnet,**
**dass** an dem zweiten Datenausgang (13) der Datenrahmen-Trennschaltung (11) ein Zwischenspeicher (16) zum Zwischenspeichern der getrennten Informationsdaten vorgesehen ist.

13. Empfänger nach einem der vorangehenden Ansprüche,
**dadurch gekennzeichnet,**
**dass** der Zwischenspeicher (16) mit dem zweiten Dateneingang (19) der steuerbaren Schalteinrichtung (20) verbunden ist.

14. Empfänger nach einem der vorangehenden Ansprüche,
**dadurch gekennzeichnet,**
**dass** der erste Datenausgang (12) der Datenrahmen-Trennschaltung (11) mit dem ersten Dateneingang (22) der steuerbaren Schalteinrichtung (20) verbunden ist.

15. Empfänger nach einem der vorangehenden Ansprüche,
**dadurch gekennzeichnet,**
**dass** der Entzerrer (8), die Datenrahmen-Trennschaltung (11), die steuerbare Schalteinrichtung (20) und die Kanaldekodierungsschaltung (35) in dem digitalen Signalprozessor (49) integriert sind.

16. Empfänger nach einem der vorangehenden Ansprüche,
**dadurch gekennzeichnet,**
**dass** der Zwischenspeicher (16) in dem digitalen Signalprozessor (49) integriert ist.

17. Empfänger nach einem der vorangehenden Ansprüche,
**dadurch gekennzeichnet,**
**dass** die in dem digitalen Signalprozessor (49) integrierte erste Steuereinheit (27) eine Speichersteuerung (26) zur Ansteuerung des Zwischenspeichers (16) aufweist.

18. Empfänger nach einem der vorangehenden Ansprüche,
**dadurch gekennzeichnet,**
**dass** die Kanaldekodierungsschaltung (35) in Abhängigkeit von einem von der Steuerschaltung (27, 38) empfangenen Steuersignal die anliegenden Daten entsprechend einer ersten Dekodierungsanweisung zur Dekodierung von Signalisierungsdaten oder entsprechend einer zweiten Dekodierungsanweisung zur Dekodierung von Informationsdaten dekodiert.

19. Empfänger nach einem der vorangehenden Ansprüche,
**dadurch gekennzeichnet,**
**dass** die Kanaldekodierungsschaltung (35) die Dekodierungsanweisung von der Steuerschaltung (27, 38) über Steuerleitungen empfängt.

20. Empfänger nach einem der vorangehenden Ansprüche,
**dadurch gekennzeichnet,**
**dass** der Empfänger (1) ein EGPRS-Empfänger ist.

21. Empfänger nach einem der vorangehenden Ansprüche,
**dadurch gekennzeichnet,**
**dass** der Empfänger (1) in ein mobiles Telefon eingebaut ist.

22. Empfänger nach Anspruch 1,
**dadurch gekennzeichnet,**
**dass** der Signaleingang (2) an eine Signalleitung zum Empfang der übertragenen Datenrahmen angeschlossen ist.

## Claims

1. Receiver for receiving data frames containing information data and signalling data, the signalling data comprising a data frame identification and a decoding instruction for decoding the information data, having:
(a) a signal input (2) for receiving data frames which are transmitted via a transmission channel,
(b) a data frame separating circuit (11) for separating the signalling data from the information data, and
(c) a controllable switching device (20), which, depending on a control signal, switches through the signalling data present at a first data input (22) of the switching device (20) or the information data present at a second data input (19) of the switching device (20) to a data output (32) of the switching device (20);
(d) a channel decoding circuit (35), which is connected to the data output (32) of the switching device (20) and serves for decoding the data present, the channel decoding circuit generating indication signals which indicate whether the data present have been decoded in a manner free from errors by the channel decoding circuit (35); and having
(e) a control circuit (27, 38),
the control circuit comprising a first control unit (27), which is integrated in the digital signal processor (49), and a second control unit (38), which is integrated in a baseband control unit (30),
the first control circuit (27), upon receiving a first indication signal generated by the channel decoding circuit and indicating the error-free decoding of the signalling data of a data frame, buffer-storing the information data, the decoding instruction for decoding the information data and the data frame identification in a memory (16) and outputting a control signal to the switching device (20) for switching through the buffer-stored information data to the channel decoding circuit (35),
the second control circuit (38), upon receiving a second indication signal generated by the channel decoding circuit (35) and indicating the error-free decoding of the information data by the channel decoding circuit (35) outputting the decoded information data to an LLC circuit (45) integrated in the baseband control device (50).

2. Receiver according to Claim 1,
**characterized**
**in that** the data frames are received via a mobile radio link.

3. Receiver according to Claim 1 or 2,
**characterized**
**in that** the signal input (2) is connected to a reception antenna (3) for receiving the transmitted data frames.

4. Receiver according to one of the preceding claims,
**characterized**
**in that** the data frames are transmitted in analogue modulated fashion.

5. Receiver according to one of the preceding claims,
**characterized**
**in that** an RF demodulator for demodulating the received data frames is connected to the reception antenna (3).

6. Receiver according to one of the preceding claims,
**characterized**
**in that** the RF demodulator is a PSK demodulator.

7. Receiver according to one of the preceding claims,
**characterized**
**in that** an analogue bandpass filter bank for frequency band selection is connected downstream of the RF demodulator.

8. Receiver according to one of the preceding claims,
**characterized**
**in that** an analogue/digital converter for converting the demodulated data frames into digital data frames is connected downstream of the analogue bandpass filter bank.

9. Receiver according to one of the preceding claims,
**characterized**
**in that** an equalizer for equalizing the data transmitted via the transmission channel is connected downstream of the analogue/digital converter.

10. Receiver according to one of the preceding claims,
**characterized**
**in that** the data frame separating circuit (11) for separating the signalling data from the information data is connected downstream of the equalizer.

11. Receiver according to one of the preceding claims,
**characterized**
**in that** the data frame separating circuit (11) has a first data output (12) for outputting the signalling data and a second data output (13) for outputting the information data.

12. Receiver according to one of the preceding claims,
**characterized**
**in that** a buffer memory (16) for buffer-storing the separated information data is provided at the second data output (13) of the data frame separating circuit (11).

13. Receiver according to one of the preceding claims,
**characterized**
**in that** the buffer memory (16) is connected to the second data input (19) of the controllable switching device (20).

14. Receiver according to one of the preceding claims,
**characterized**
**in that** the first data output (12) of the data frame separating circuit (11) is connected to the first data input (22) of the controllable switching device (20).

15. Receiver according to one of the preceding claims,
**characterized**
**in that** the equalizer (8), the data frame separating circuit (11), the controllable switching device (20) and the channel decoding circuit (35) are integrated in the digital signal processor (49).

16. Receiver according to one of the preceding claims,
**characterized**
**in that** the buffer memory (16) is integrated in the digital signal processor (49).

17. Receiver according to one of the preceding claims,
**characterized**
**in that** the first control unit (27) integrated in the digital signal processor (49) has a memory controller (26) for driving the buffer memory (16).

18. Receiver according to one of the preceding claims,
**characterized**
**in that** the channel decoding circuit (35), in a manner dependent on a control signal received from the control circuit (27, 38), decodes the data present in accordance with a first decoding instruction for decoding signalling data or in accordance with a second decoding instruction for decoding information data.

19. Receiver according to one of the preceding claims,
**characterized**
**in that** the channel decoding circuit (35) receives the decoding instruction from the control circuit (27, 38) via control lines.

20. Receiver according to one of the preceding claims,
**characterized**
**in that** the receiver (1) is an EGPRS receiver.

21. Receiver according to one of the preceding claims,
**characterized**
**in that** the receiver (1) is built into a mobile telephone.

22. Receiver according to Claim 1,
**characterized**
**in that** the signal input (2) is connected to a signal line for receiving the transmitted data frames.

## Revendications

1. Récepteur pour la réception de trames de données qui contiennent des données d'information et des données de signalisation, les données de signalisation comprenant une identification de trame de données et une instruction de décodage pour décoder les données d'information, comprenant :
a) une entrée de signal (2) pour recevoir des trames de données qui sont transmises via un canal de transmission,
b) un circuit de séparation de trames de données (11) pour séparer les données de signalisation des données d'information, et
c) un dispositif de commutation, pouvant être commandé (20), qui transmet en fonction d'un signal de commande, les données de signalisation présentes à une première entrée de données (22) du dispositif de communication (20) ou les données d'information présentes à une deuxième entrée de données (19) du dispositif de commutation (20) à une sortie de données (32) du dispositif de commutation (20) ;
d) un circuit de décodage de canal (35) relié avec la sortie de données (32) du dispositif de commutation (20) pour décoder les données présentes, le circuit de décodage de canal générant un signal rapporteur qui signale si le décodage des données présentes a été réussi sans erreur par le circuit de décodage de canal (35) ; et comprenant
e) un circuit de commande (27, 38), le circuit de commande comprenant une première unité de commande (27) intégrée dans un processeur de signal (49) numérique et une deuxième unité de commande (38) intégrée dans une unité de commande bande de base (50),
lors de la réception d'un premier signal rapporteur, généré par le circuit de décodage de canal, qui signale le décodage sans erreur des données de signalisation d'une trame de données, la première unité de commande (27) mémorise temporairement dans une mémoire (16) les données d'information, l'instruction de décodage pour décoder les données d'information et l'identification de trames de données et délivre un signal de commande au dispositif de commutation (20) pour transmettre les données d'informations mémorisées temporairement au circuit de décodage de canal (35),
lors de la réception d'un deuxième signal rapporteur, généré par le circuit de décodage de canal (35), qui signale le décodage sans erreur des données d'information par le circuit de décodage de canal (35), la deuxième unité de commande (38) délivre les données d'information décodées à un circuit LLC (45) intégré dans le dispositif de commande - bande de base (50).

2. Récepteur selon la revendication 1,
**caractérisé en ce que**
les trames de données sont reçues via une liaison de téléphonie mobile.

3. Récepteur selon la revendication 1 ou 2,
**caractérisé en ce que**
l'entrée de signal (2) est raccordée à une antenne de réception (3) pour recevoir les trames de données transmises.

4. Récepteur selon l'une quelconque des revendications précédentes,
**caractérisé en ce que**
les trames de données sont transmises de façon modulée analogiquement.

5. Récepteur selon l'une quelconque des revendications précédentes,
**caractérisé en ce qu'**
un démodulateur HF pour démoduler les trames de données reçues est raccordé à l'antenne de réception (3).

6. Récepteur selon l'une quelconque des revendications précédentes,
**caractérisé en ce que**
le démodulateur HF est un démodulateur PSK.

7. Récepteur selon l'une quelconque des revendications précédentes,
**caractérisé en ce qu'**
un banc de filtrage passe-bande analogique pour la sélection de bande de fréquence est connecté en aval du démodulateur HF.

8. Récepteur selon l'une quelconque des revendications précédentes,
**caractérisé en ce qu'**
un convertisseur analogique/numérique pour convertir les trames de données démodulées en trames de données numériques est connecté en aval du banc de filtrage passe-bande analogique.

9. Récepteur selon l'une quelconque des revendications précédentes,
**caractérisé en ce qu'**
un correcteur pour corriger les données transmises via le canal de transmission est connecté en aval du convertisseur analogique/numérique.

10. Récepteur selon l'une quelconque des revendications précédentes,
**caractérisé en ce que**
le circuit de séparation de trames de données (11) pour séparer les données de signalisation des données d'information est connecté en aval du correcteur.

11. Récepteur selon l'une quelconque des revendications précédentes,
**caractérisé en ce que**
le circuit de séparation de trames de données (11) comprend une première sortie de données (12) pour délivrer les données de signalisation et une deuxième sortie de données (13) pour délivrer les données d'information.

12. Récepteur selon l'une quelconque des revendications précédentes,
**caractérisé en ce qu'**
une mémoire temporaire (16) pour mémoriser temporairement les données d'information séparées est prévue au niveau de la deuxième sortie de données (13) du circuit de séparation de trames de données (11).

13. Récepteur selon l'une quelconque des revendications précédentes,
**caractérisé en ce que**
la mémoire temporaire (16) est reliée avec la deuxième entrée de données (19) du dispositif de commutation (20) pouvant être commandé.

14. Récepteur selon l'une quelconque des revendications précédentes,
**caractérisé en ce que**
la première sortie de données (12) du circuit de séparation de trames de données (11) est reliée avec la première entrée de données (22) du dispositif de commutation (20) pouvant être commandé.

15. Récepteur selon l'une quelconque des revendications précédentes,
**caractérisé en ce que**
le correcteur (8), le circuit de séparation de trames de données (11), le dispositif de commutation pouvant être commandé (20) et le circuit de décodage de canal (35) sont intégrés dans le processeur de signal numérique (49).

16. Récepteur selon l'une quelconque des revendications précédentes,
**caractérisé en ce que**
la mémoire temporaire (16) est intégrée dans le processeur de signal numérique (49).

17. Récepteur selon l'une quelconque des revendications précédentes,
**caractérisé en ce que**
la première unité de commande (27) intégrée dans le processeur de signal numérique (49) comprend une commande de mémoire (26) pour le contrôle de la mémoire temporaire (16).

18. Récepteur selon l'une quelconque des revendications précédentes,
**caractérisé en ce que**
le circuit de décodage de canal (35) décode, en fonction d'un signal de commande reçu par un des circuits de commande (27, 38), les données présentes, selon une première instruction de décodage pour décoder des données de signalisation, ou selon une deuxième instruction de décodage pour décoder des données d'information.

19. Récepteur selon l'une quelconque des revendications précédentes,
**caractérisé en ce que**
le circuit de décodage de canal (35) reçoit l'instruction de décodage du circuit de commande (27, 38) via des lignes de commande.

20. Récepteur selon l'une quelconque des revendications précédentes,
**caractérisé en ce que**
le récepteur (1) est un récepteur EGPRS.

21. Récepteur selon l'une quelconque des revendications précédentes,
**caractérisé en ce que**
le récepteur (1) est intégré dans un téléphone mobile.

22. Récepteur selon la revendication 1,
**caractérisé en ce que**
l'entrée de signal (2) est raccordée à une ligne de signal pour la réception des trames de données transmises.
